# EUROPEAN PATENT APPLICATION

(11) **EP 4 742 338 A1**
(43) Date of publication of application: **13.05.2026**
(21) Application number: 24835381.5
(22) Date of filing: 03.07.2024
(51) Int. Cl.: H01M 10/04, H01M 50/188

(54) **ASSEMBLING METHOD FOR CYLINDRICAL BATTERY, AND CYLINDRICAL BATTERY**

(30) Priority: 03.07.2023 CN 202310807650
(71) Applicant: SVOLT Energy Technology Co., Ltd., Changzhou, Jiangsu 213200 (CN)
(72) Inventor: YUAN, Yue, hangzhou, Jiangsu 213200 (CN); LI, Jian, hangzhou, Jiangsu 213200 (CN); MA, Yonggui, hangzhou, Jiangsu 213200 (CN); HOU, Zhanrui, hangzhou, Jiangsu 213200 (CN)
(74) Representative: Michalski Hüttermann & Partner Patentanwälte mbB
(86) International application number: PCT/CN2024/103422
(87) International publication number: WO 2025/007901

(57) **Abstract**

The present application relates to the technical field of energy batteries, and discloses a cylindrical battery assembly method and a cylindrical battery. The assembly method includes the following steps: mounting a positive electrode column into a mounting hole in an insulating and sealing manner; arranging a riveting block inside a shell and connecting the riveting block to an outer circumference of a riveting bar of the positive electrode column; connecting a positive electrode current collector plate to a positive electrode tab of an electrode set; placing the electrode set with the positive electrode current collector plate into the shell, and clamping a boss into a groove; welding mating portions of a bottom surface of the groove and a top surface of the boss outside the shell; connecting a negative electrode current collector plate to a negative electrode tab of the electrode set and the shell, to introduce negative electrode current of the electrode set into the shell; and sealing and connecting a negative electrode cover plate to an opening of a second end surface of the shell. The mating between the top surface of the boss and the bottom surface of the groove increases a welding area, and decreases a thickness of the positive electrode column, thereby reducing welding difficulty, improving assembly efficiency, reducing contact internal resistance, increasing the current-carrying capacity of the battery, and improving product yield. The riveting block can increase structural strength of a positive electrode side of a battery cell.

## Description

### CROSS REFERENCE TO RELATED APPLICATION

The present application claims priority to Chinese Patent Application No. 2023108076506 filed with the China National Intellectual Property Administration on July 3, 2023, and entitled "CYLINDRICAL BATTERY ASSEMBLY METHOD AND CYLINDRICAL BATTERY", which is incorporated herein by reference in entirety.

### TECHNICAL FIELD

The present application relates to the technical field of cylindrical batteries, and specifically relates to a cylindrical battery assembly method and a cylindrical battery.

### BACKGROUND ART

Cylindrical batteries have become one of the important research directions for power batteries used in new energy vehicles due to their high energy density, high safety, and low cost. A cylindrical battery mainly includes a shell, a roll core, a positive cover plate, a negative cover plate, a positive electrode column, a positive current collector plate, and a negative electrode current collector plate, where a first end of the shell is open, an end surface of a second end of the shell is provided with a mounting hole, the roll core is arranged in the shell, the negative cover plate seals the first end of the shell, the positive electrode column is mounted in the mounting hole, and the positive current collector plate is configured to be connected to a positive electrode tab of the roll core and the positive electrode column.

In the prior art, the connection between the positive current collector plate and the positive electrode column is usually achieved by a resistance welding pin that passes through a central through hole of the roll core to weld an adapter and the electrode column from the inside of the shell. The limited space within the central through hole of the roll core leads to small welding area and high welding difficulty. In addition, influenced by the thickness of the positive electrode column, post-welding current contact internal resistance is relatively high, which consequently affects the current-carrying capacity of the battery.

### SUMMARY

In view of this, the present application provides a cylindrical battery assembly method and a cylindrical battery, to solve the problem that the current-carrying capacity of existing cylindrical batteries is affected by small welding area, high welding difficulty, and high post-welding current contact internal resistance.

In a first aspect, the present application provides a cylindrical battery assembly method, where a cylindrical battery includes a shell, a positive electrode column, a riveting block, a positive electrode current collector plate, an electrode set, a negative electrode current collector plate, and a negative electrode cover plate; a first end surface of the shell is provided with a mounting hole, a second end surface of the shell is formed with an opening, a side of the positive electrode column that faces an inside of the shell is provided with a groove, a riveting rib is formed on a circumference of the groove, and a side of the positive electrode current collector plate that faces the positive electrode column is provided with a boss; the assembly method includes the following steps:
mounting the positive electrode column into the mounting hole in an insulating and sealing manner;
arranging the riveting block inside the shell and connecting the riveting block to an outer circumference of the riveting rib of the positive electrode column;
connecting the positive electrode current collector plate to a positive electrode tab of the electrode set;
placing the electrode set with the positive electrode current collector plate into the shell, and clamping the boss into the groove; and
welding mating portions of a bottom surface of the groove and a top surface of the boss from outside the shell.

Beneficial effect: The positive electrode column is mounted into the mounting hole on the first end surface of the shell in the insulating and sealing manner, to achieve mutual insulating and sealing fixed connection between the positive electrode column and the shell; the boss of the positive electrode current collector plate is clamped into the groove of the positive electrode column, and the mating portions of the top surface of the boss and the bottom surface of the groove are welded, to achieve welding fixation between the boss and the groove; the mating between the top surface of the boss and the bottom surface of the groove increases welding area, and the groove decreases a welding thickness of the positive electrode column, thereby reducing welding difficulty, improving assembly efficiency, reducing contact internal resistance, increasing the current-carrying capacity of the battery, and improving product yield; and the riveting block is arranged on the outer circumference of the riveting rib to increase structural strength of a positive electrode side of a battery cell.

In an optional implementation, the arranging the riveting block inside the shell and connecting the riveting block to an outer circumference of the riveting rib of the positive electrode column specifically includes: fitting the riveting block to an outer circumference of the positive electrode column, allowing the riveting rib to pass through a through hole on the riveting block; and/or bending the riveting rib outwards from the groove, to insert the riveting rib into a mounting groove of the riveting block.

Beneficial effect: The riveting block is provided with the mounting groove, and the riveting rib is bent outwards from the groove and inserted into the mounting groove, ensuring reliable mating between the riveting rib and the riveting block, and fixing the riveting rib through the limitation of the mounting groove to prevent separation from the riveting block.

In an optional implementation, the positive electrode column includes a limit protrusion located outside the shell and the riveting rib located inside the shell, the limit protrusion and the riveting rib limit two ends of the positive electrode column respectively, and the mounting the positive electrode column into the mounting hole in an insulating and sealing manner specifically includes: arranging a sealing member to abut against an outer wall of the positive electrode column and an inner wall of the mounting hole; arranging an upper insulating member between the limit protrusion and an outer surface of the shell; arranging a lower insulating member on an inner surface of the shell, and allowing the riveting block to abut against the lower insulating member.

Beneficial effect: The upper insulating member insulates the limit protrusion and the outer surface of the shell, and the sealing member seals the outer wall of the positive electrode column and the inner wall of the mounting hole, ensuring the sealing property of the battery cell. The lower insulating member insulates the inner surface of the shell and the riveting block, thereby achieving insulating and sealing fixation between the positive electrode column and the shell. Meanwhile, since the riveting block abuts against the lower insulating member, when the mating portions of the boss and the groove are welded, the riveting rib and the riveting block provide force support, leading to great instantaneous impact on the lower insulating member, where the riveting block increases contact force area with the lower insulating member, thereby reducing pressure on the lower insulating member and reducing the cracking risk of the lower insulating member under force.

In an optional implementation, the arranging an upper insulating member between the limit protrusion and an outer surface of the shell specifically includes: wrapping an outer circumference of the limit protrusion with a first insulating portion of the upper insulating member; and arranging a second insulating portion of the upper insulating member between a bottom surface of the limit protrusion and the outer surface of the shell.

Beneficial effect: The first insulating portion wraps the outer circumference of the limit protrusion, to provide protection for the limit protrusion and prevent collision damage to the limit protrusion; and the second insulating portion is arranged between the bottom surface of the limit protrusion and the outer surface of the shell, thereby achieving insulation between the limit protrusion and the shell.

In an optional implementation, the arranging a sealing member to abut against an outer wall of the positive electrode column and an inner wall of the mounting hole specifically includes: arranging a first sealing portion of the sealing member to abut against the outer surface of the shell and the bottom surface of the limit protrusion, and allowing an end of the first sealing portion to abut against the second insulating portion; arranging a second sealing portion of the sealing member to abut against the outer wall of the positive electrode column and the inner wall of the mounting hole, and allowing an end of the second sealing portion to abut against the lower insulating member.

Beneficial effect: The first sealing portion is arranged to abut against the outer surface of the shell and the bottom surface of the limit protrusion, thereby sealing an area between the outer surface of the shell and the bottom surface of the limit protrusion; the second sealing portion is arranged to abut against the outer wall of the positive electrode column and the inner wall of the mounting hole, thereby sealing an area between the outer wall of the positive electrode column and the inner wall of the mounting hole; the end of the first sealing portion abuts against the second insulating portion, and the end of the second sealing portion abuts against the lower insulating member, to enhance the sealing property.

In an optional implementation, the clamping the boss into the groove specifically includes: rounding an opening of the groove to form a chamfer, and clamping the boss into the groove through the chamfer.

Beneficial effect: By rounding the opening of the groove to form the chamfer, the boss can be easily clamped into the groove through the chamfer, reducing assembly difficulty and improving assembly efficiency.

In an optional implementation, the welding mating portions of a bottom surface of the groove and a top surface of the boss from outside the shell specifically includes: forming a welding slot on a top surface of the positive electrode column, with the welding slot corresponding to the groove; and welding the mating portions of the bottom surface of the groove and the top surface of the boss through the welding slot from outside the shell.

Beneficial effect: The welding slot further decreases the welding thickness of the positive electrode column, and reduces the welding difficulty. Meanwhile, the welding slot prevents welding marks from protruding from the surface of the positive electrode column to affect connection with an external structure.

In an optional implementation, the cylindrical battery assembly method further includes: connecting the negative electrode current collector plate to a negative electrode tab of the electrode set and the shell, to introduce negative electrode current of the electrode set into the shell.

Beneficial effect: The negative electrode current collector plate is connected to the negative electrode tab of the electrode set, to converge the negative electrode current of the electrode set and then output the negative electrode current. Because the negative electrode current collector plate is also connected to the shell, the negative electrode current collector plate and the shell are electrically negative as a whole.

In an optional implementation, the cylindrical battery assembly method further includes: sealing and connecting the negative electrode cover plate to the opening of the second end surface of the shell, thereby sealing the shell 1 and completing the assembly of the cylindrical battery.

In a second aspect, the present application further provides a cylindrical battery assembled using the cylindrical battery assembly method of the present application, including a shell, an electrode set, a positive electrode column, a riveting block, a positive electrode current collector plate, a negative electrode current collector plate, and a negative electrode cover plate, where a first end surface of the shell is provided with a mounting hole, and a second end surface of the shell is formed with an opening; the electrode set is arranged in the shell; the positive electrode column is mounted in the mounting hole in an insulating and sealing manner, a side of the positive electrode column that faces an inside of the shell is provided with a groove, and a riveting rib is formed on a circumference of the groove; the riveting block is arranged in the shell and connected to an outer circumference of the riveting rib; the positive electrode current collector plate is connected to a positive electrode tab of the electrode set, a side of the positive electrode current collector plate that faces the positive electrode column is provided with a boss, and the boss is clamped into the groove; the negative electrode current collector plate is connected to a negative electrode tab of the electrode set and the shell; and the negative electrode cover plate is sealed at the opening of the second end surface of the shell.

The cylindrical battery of the present invention, assembled using the aforementioned cylindrical battery assembly method, has the same technical effects as the cylindrical battery assembly method. Details will not be repeated here.

### BRIEF DESCRIPTION OF DRAWINGS

To describe the technical solutions in the embodiments of the present application or in the prior art more clearly, the following briefly describes the accompanying drawings required for describing the specific embodiments or the prior art. Apparently, the accompanying drawings in the following description show merely some embodiments of the present application, and a person of ordinary skill in the art can still derive other drawings from these drawings without inventive efforts.
FIG. 1 is a flowchart of main steps of a cylindrical battery assembly method according to an embodiment of the present application;
FIG. 2 is a schematic diagram of a three-dimensional structure of a cylindrical battery according to an embodiment of the present application;
FIG. 3 is a top view of a cylindrical battery according to an embodiment of the present application;
FIG. 4 is a cross-sectional view taken along line A-A in FIG. 3;
FIG. 5 is an enlarged cross-sectional view of a cylindrical battery according to an embodiment of the present application;
FIG. 6 is a cross-sectional view of a positive electrode column according to an embodiment of the present application;
FIG. 7 is a schematic diagram of a three-dimensional structure of a positive electrode column according to an embodiment of the present application;
FIG. 8 is a cross-sectional view of a positive electrode current collector plate according to an embodiment of the present application; and
FIG. 9 is a schematic diagram of a three-dimensional structure of a positive electrode current collector plate according to an embodiment of the present application.

1. Shell; 2. Positive electrode column; 21. Groove; 211. Rounded corner; 22. Riveting rib; 23. Limit protrusion; 24. Welding slot; 3. Riveting block; 31. Mounting groove; 4. Positive electrode current collector plate; 41. Boss; 5. Electrode set; 6. Upper insulating member; 61. First insulating portion; 62. Second insulating portion; 7. Sealing member; 71. First sealing portion; 72. Second sealing portion; 8. Lower insulating member; 9. Negative electrode current collector plate; 10. Negative electrode cover plate.

### DETAILED DESCRIPTION OF EMBODIMENTS

In order to make the objectives, technical solutions, and advantages of the embodiments of the present application clearer, the technical solutions in the embodiments of the present application will be clearly and completely described below in conjunction with the accompanying drawings in the embodiments of the present application. Apparently, the described embodiments are merely some of the embodiments of the present application, not all of them. On the basis of the embodiments in the present application, all other embodiments obtained by those skilled in the art without inventive efforts shall fall within the scope of protection of the present application.

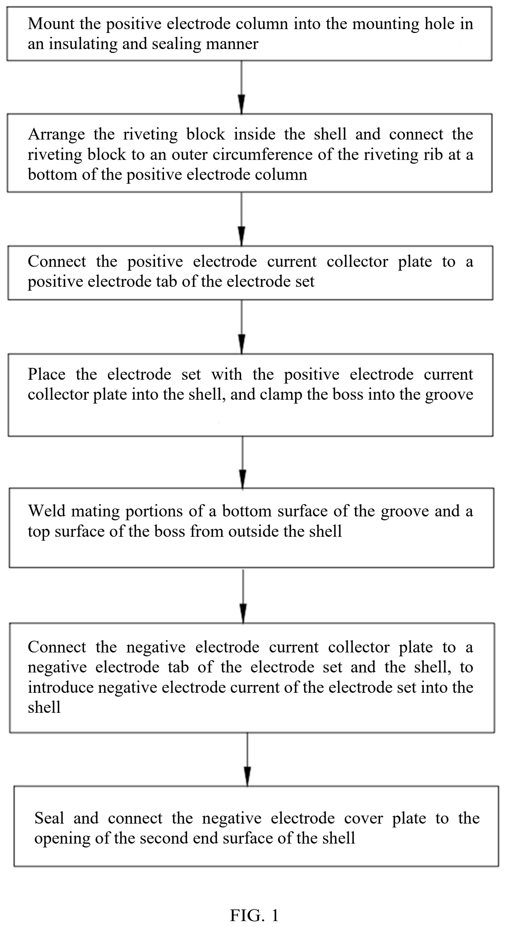

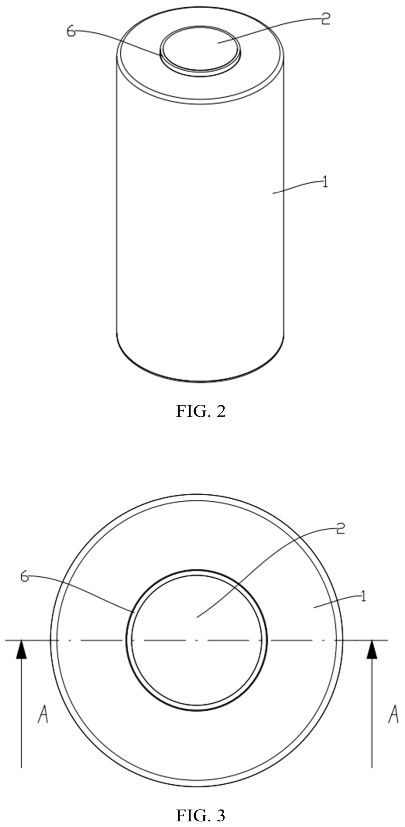

As shown in FIG. 1 to FIG. 5, according to the embodiments of the present application, in one aspect, a cylindrical battery assembly method is provided. A cylindrical battery includes a shell 1, a positive electrode column 2, a riveting block 3, a positive electrode current collector plate 4, an electrode set 5, a negative electrode current collector plate 9, and a negative electrode cover plate 10, where a first end surface of the shell 1 is provided with a mounting hole, a second end surface of the shell 1 is formed with an opening, a side of the positive electrode column 2 that faces an inside of the shell 1 is provided with a groove 21, a riveting rib 22 is formed on a circumference of the groove 21, and a side of the positive electrode current collector plate 4 that faces the positive electrode column 2 is provided with a boss 41.

The assembly method includes the following steps: mounting the positive electrode column 2 into the mounting hole in an insulating and sealing manner; arranging the riveting block 3 inside the shell 1 and connecting the riveting block 3 to an outer circumference of the riveting rib 22 of the positive electrode column 2; connecting the positive electrode current collector plate 4 to a positive electrode tab of the electrode set 5; placing the electrode set 5 with the positive electrode current collector plate 4 into the shell 1, and clamping the boss 41 into the groove 21; and welding mating portions of the groove 21 and the boss 41.

According to the assembly method in this embodiment, the positive electrode column 2 is mounted into the mounting hole on the first end surface of the shell 1 in the insulating and sealing manner, to achieve mutual insulating and sealing fixed connection between the positive electrode column 2 and the shell 1; the boss 41 of the positive electrode current collector plate 4 is clamped into the groove 21 of the positive electrode column 2, and mating portions of a top surface of the boss 41 and a bottom surface of the groove 21 are welded, to achieve welding fixation between the boss 41 and the groove 21; the mating between the top surface of the boss 41 and the bottom surface of the groove 21 increases welding area, and the groove 21 decreases a welding thickness of the positive electrode column 2, thereby reducing welding difficulty, improving assembly efficiency, reducing contact internal resistance, increasing the current-carrying capacity of the battery, and improving product yield; and the riveting block 3 is arranged on the outer circumference of the riveting rib 22 to increase structural strength of a positive electrode side of a battery cell.

Hereinafter, the cylindrical battery assembly method will be detailed in conjunction with the accompanying drawings.

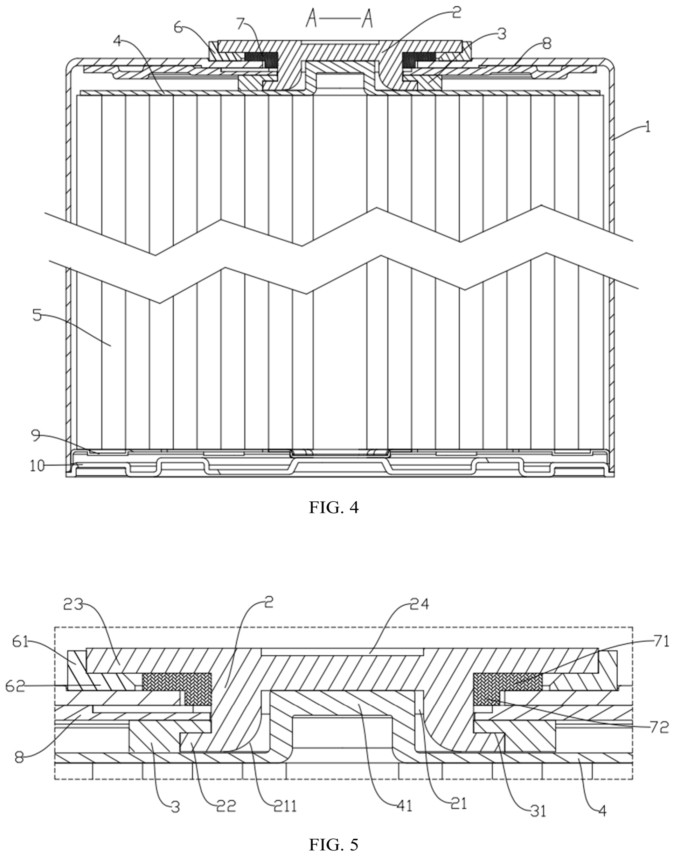

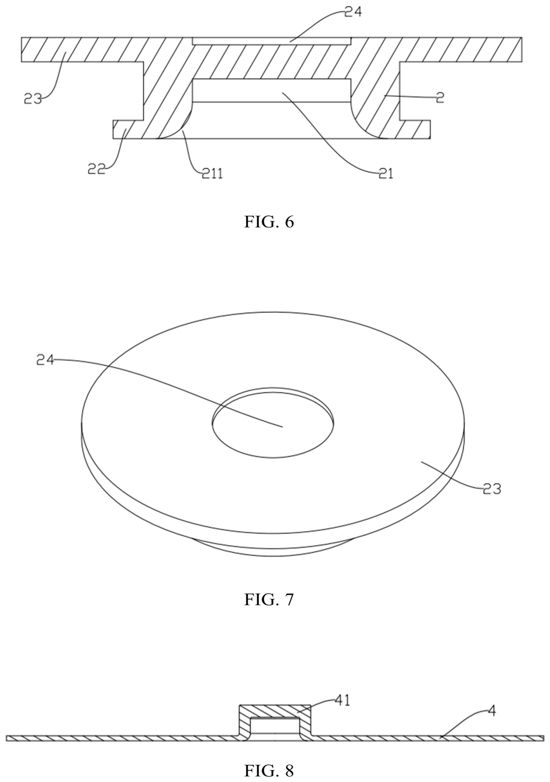

As shown in FIG. 4 to FIG. 6, arranging the riveting block 3 inside the shell 1 and connecting the riveting block 3 to an outer circumference of the riveting rib 22 of the positive electrode column 2 specifically includes: fitting the riveting block 3 to an outer circumference of the positive electrode column 2, allowing the riveting rib 22 to pass through a through hole on the riveting block 3; and/or bending the riveting rib 22 outwards from the groove 21, to insert the riveting rib 22 into a mounting groove 31 of the riveting block 3. The riveting block 3 is provided with the mounting groove 31, and the riveting rib 22 is bent outwards from the groove 21 and inserted into the mounting groove 31, ensuring reliable mating between the riveting rib 22 and the riveting block 3, and fixing the riveting rib 22 through the limitation of the mounting groove 31 to prevent separation from the riveting block 3.

In this embodiment, the riveting rib 22 is an annular bar arranged along the circumference of the groove 21, the riveting block 3 is an annular block with a through hole in the middle, and the mounting groove 31 is formed on an inner wall of the through hole. During mounting, the riveting block 3 is first fitted to the outer circumference of the groove 21 via the through hole, the riveting rib 22 on the circumference of the groove 21 is bent towards the outside of the groove 21 to form the annular bar, and the annular bar is clamped in the mounting groove 31, achieving coordinated mounting of the riveting block 3 and the riveting rib 22.

The positive electrode column 2 includes a limit protrusion 23 located outside the shell 1 and the riveting rib 22 located inside the shell 1. The limit protrusion 23 and the riveting rib 22 limit two ends of the positive electrode column 2 respectively to prevent the positive electrode column 2 from coming out of the mounting hole of the shell 1. Specifically, the mounting hole is a circular hole, and the positive electrode column 2 is correspondingly a circular column. The limit protrusion 23, the groove 21, and the riveting rib 22 can be formed by stamping or extrusion after the positive electrode column 2 is inserted into the mounting hole. This embodiment does not limit the forming method.

In this embodiment, mounting the positive electrode column 2 into the mounting hole in an insulating and sealing manner specifically includes: arranging a sealing member 7 to abut against an outer wall of the positive electrode column 2 and an inner wall of the mounting hole, arranging an upper insulating member 6 between the limit protrusion 23 and an outer surface of the shell 1, arranging a lower insulating member 8 on an inner surface of the shell 1, and allowing the riveting block 3 to abut against the lower insulating member 8. The upper insulating member 6 insulates the limit protrusion 23 and the outer surface of the shell 1, and the sealing member 7 seals the outer wall of the positive electrode column 2 and the inner wall of the mounting hole, ensuring the sealing property of the battery cell. The lower insulating member 8 insulates the inner surface of the shell 1 and the riveting block 3, thereby achieving insulating and sealing fixation between the positive electrode column 2 and the shell 1. Meanwhile, since the riveting block 3 abuts against the lower insulating member 8, when the mating portions of the boss 41 and the groove 21 are welded, the riveting rib 22 and the riveting block 3 provide force support, leading to great instantaneous impact on the lower insulating member 8, where the riveting block 3 increases contact force area with the lower insulating member 8, thereby reducing pressure on the lower insulating member 8 and reducing the cracking risk of the lower insulating member 8 under force.

In this embodiment, the shell 1 is a hollow cylindrical shell with a closed end and an open end, the mounting hole is provided on the closed end surface, the positive electrode column 2 is insulated and sealed in the mounting hole, and the negative electrode cover plate 10 is sealed at the open end, thereby achieving sealed assembly of the shell 1.

In this embodiment, arranging an upper insulating member 6 between the limit protrusion 23 and an outer surface of the shell 1 specifically includes: wrapping an outer circumference of the limit protrusion 23 with a first insulating portion 61 of the upper insulating member 6, and arranging a second insulating portion 62 of the upper insulating member 6 between a bottom surface of the limit protrusion 23 and the outer surface of the shell 1. The upper insulating member 6 includes the first insulating portion 61 and the second insulating portion 62, where the first insulating portion 61 wraps the outer circumference of the limit protrusion 23, to provide protection for the limit protrusion 23 and prevent collision damage to the limit protrusion 23; and the second insulating portion 62 is arranged between the bottom surface of the limit protrusion 23 and the outer surface of the shell 1, thereby achieving insulation between the limit protrusion 23 and the shell 1.

Specifically, the upper insulating member 6 is a U-shaped member with a clearance hole in the middle, the clearance hole allows the positive electrode column 2 to pass through, a vertical portion of the U-shaped member is the first insulating portion 61 that wraps the outer circumference of the limit protrusion 23, and a horizontal portion of the U-shaped member is the second insulating portion 62 that is arranged between the bottom surface of the limit protrusion 23 and the outer surface of the shell 1.

In this embodiment, arranging a sealing member 7 to abut against an outer wall of the positive electrode column 2 and an inner wall of the mounting hole specifically includes: arranging a first sealing portion 71 of the sealing member 7 to abut against the outer surface of the shell 1 and the bottom surface of the limit protrusion 23, and allowing an end of the first sealing portion 71 to abut against the second insulating portion 62; arranging a second sealing portion 72 of the sealing member 7 to abut against the outer wall of the positive electrode column 2 and the inner wall of the mounting hole, and allowing an end of the second sealing portion 72 to abut against the lower insulating member 8. The sealing member 7 includes the first sealing portion 71 and the second sealing portion 72, where the first sealing portion 71 is arranged to abut against the outer surface of the shell 1 and the bottom surface of the limit protrusion 23, thereby sealing an area between the outer surface of the shell 1 and the bottom surface of the limit protrusion 23; the second sealing portion 72 is arranged to abut against the outer wall of the positive electrode column 2 and the inner wall of the mounting hole, thereby sealing an area between the outer wall of the positive electrode column 2 and the inner wall of the mounting hole; the end of the first sealing portion 71 abuts against the second insulating portion 62, and the end of the second sealing portion 72 abuts against the lower insulating member 8, to enhance the sealing property.

Specifically, the sealing member 7 is a T-shaped sealing ring, a horizontal portion of the T-shaped sealing ring is the first sealing portion 71 that is arranged between the outer surface of the shell 1 and the bottom surface of the limit protrusion 23, the end of the first sealing portion 71 abuts against the second insulating portion 62, a vertical portion of the T-shaped sealing ring is the second sealing portion 72 that is arranged between the outer wall of the positive electrode column 2 and the inner wall of the mounting hole, and the end of the second sealing portion 72 abuts against the lower insulating member 8.

The positive electrode current collector plate 4 is connected to the positive electrode tab of the electrode set 5, to achieve convergence and extraction of positive electrode current in the electrode set 5 through the positive electrode current collector plate 4. Specifically, the electrode set 5 is used to accommodate and release electricity. In this embodiment, the electrode set 5 is a wound cylindrical battery cell and has a size less than an inner cavity size of the shell 1, making it easy to place the electrode set 5 inside the shell 1. The electrode set 5 is provided with the positive electrode tab and a negative electrode tab, facilitating extraction of positive electrode current and negative electrode current.

Further, clamping the boss 41 into the groove 21 specifically includes: rounding an opening of the groove 21 to form a chamfer 211, and clamping the boss 41 into the groove 21 through the chamfer 211. By rounding the opening of the groove 21 to form the chamfer 211, the boss 41 can be easily clamped into the groove 21 through the chamfer 211, reducing assembly difficulty and improving assembly efficiency.

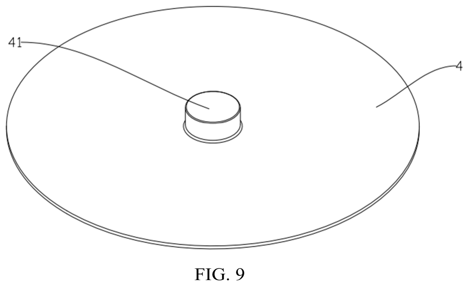

As shown in FIG. 4 to FIG. 9, in this embodiment, the positive electrode current collector plate 4 is welded to the positive electrode tab of the electrode set 5, to converge positive electrode current of the electrode set 5 and then output the positive electrode current. Specifically, the positive electrode current collector plate 4 and the electrode set 5 are adapted in shape and may be shaped as round plates, the boss 41 is provided at a middle portion of the circular plate, and the boss 41 may be mated with the groove 21 on the positive electrode column 2. In this embodiment, the groove 21 is a cylindrical groove 21, and the boss 41 is a hollow circular platform. The circular platform may be formed by stamping or squeezing the middle portion of the positive electrode current collector plate 4. A size of the circular platform is less than an inner diameter of the groove 21, so that the boss 41 can be clamped into the groove 21.

Welding the mating portions of a bottom surface of the groove 21 and a top surface of the boss 41 from outside the shell 1 specifically includes: forming a welding slot 24 on a top surface of the positive electrode column 2, with the welding slot 24 corresponding to the groove 21; and welding the mating portions of the bottom surface of the groove 21 and the top surface of the boss 41 through the welding slot 24. The welding slot 24 further decreases the welding thickness of the positive electrode column 2, and reduces the welding difficulty. Meanwhile, the welding slot 24 prevents welding marks from protruding from the surface of the positive electrode column 2 to affect connection with an external structure.

Specifically, the welding slot 24 is a circular groove that matches the groove 21 in size, so as to fully weld the bottom surface of the groove 21 to the top surface of the boss 41 and increase the welding strength. The welding slot 24 and the groove 21 are both blind, and there is a welding bar between them. The welding bar can be welded to the boss 41 clamped into the groove 21.

In this embodiment, the cylindrical battery assembly method further includes: connecting the negative electrode current collector plate 9 to the negative electrode tab of the electrode set 5 and the shell 1, to introduce negative electrode current of the electrode set 5 into the shell 1.

Specifically, the negative electrode current collector plate 9 is welded to the negative electrode tab of the electrode set 5, to converge the negative electrode current of the electrode set 5 and then output the negative electrode current. In this embodiment, because the negative electrode current collector plate 9 is welded to the shell 1, the negative electrode current collector plate 9 and the shell 1 are electrically negative as a whole.

The cylindrical battery assembly method further includes: sealing and connecting the negative electrode cover plate 10 to the opening of the second end surface of the shell 1.

Specifically, the negative electrode cover plate 10 is welded to the opening of the shell 1, thereby sealing the shell 1 and completing the assembly of the cylindrical battery.

In terms of welding methods, penetration welding connection can be employed between the bottom surface of the groove 21 and the top surface of the boss 41, between the positive electrode current collector plate 4 and the positive electrode tab of the electrode set 5, between the negative electrode current collector plate 9 and the negative electrode tab of the electrode set 5, and between the negative electrode cover plate 10 and the shell 1.

This embodiment further discloses a cylindrical battery assembled using the cylindrical battery assembly method in this embodiment, including a shell 1, an electrode set 5, a positive electrode column 2, a riveting block 3, a positive electrode current collector plate 4, a negative electrode current collector plate 9, and a negative electrode cover plate 10, where a first end surface of the shell 1 is provided with a mounting hole, and a second end surface of the shell 1 is formed with an opening; the electrode set 5 is arranged in the shell 1; the positive electrode column 2 is mounted in the mounting hole in an insulating and sealing manner, a side of the positive electrode column 2 that faces an inside of the shell 1 is provided with a groove 21, and a riveting rib 22 is formed on a circumference of the groove 21; the riveting block 3 is arranged in the shell 1 and connected to an outer circumference of the riveting rib 22; the positive electrode current collector plate 4 is connected to a positive electrode tab of the electrode set 5, a side of the positive electrode current collector plate 4 that faces the positive electrode column 2 is provided with a boss 41, and the boss 41 is clamped into the groove 21; the negative electrode current collector plate 9 is connected to a negative electrode tab of the electrode set 5 and the shell 1; and the negative electrode cover plate 10 is sealed at the opening of the second end surface of the shell 1. The cylindrical battery in this embodiment, assembled using the aforementioned cylindrical battery assembly method, has the same technical effects as the cylindrical battery assembly method. Details will not be repeated here.

A side of the riveting block 3 that faces the positive electrode current collector plate 4 is provided with a mounting groove 31, and the riveting rib 22 is inserted into a through hole of the riveting block 3 and bent into the mounting groove 31, thereby achieving coordinated mounting of the riveting rib 22 and the riveting block 3.

The cylindrical battery further includes an insulating sealing assembly, and the insulating sealing assembly includes a sealing member 7, an upper insulating member 6, and a lower insulating member 8, where the sealing member 7 is arranged between an outer wall of the positive electrode column 2 and an inner wall of the mounting hole, the upper insulating member 6 is arranged between the limit protrusion 23 and an outer surface of the shell 1, the lower insulating member 8 is arranged on an inner surface of the shell 1, and the riveting block 3 abuts against the lower insulating member 8. The upper insulating member 6 insulates the limit protrusion 23 and the outer surface of the shell 1, and the sealing member 7 seals the outer wall of the positive electrode column 2 and the inner wall of the mounting hole, ensuring the sealing property of the battery cell. The lower insulating member 8 insulates the inner surface of the shell 1 and the riveting block 3, thereby achieving insulating and sealing fixation between the positive electrode column 2 and the shell 1. Meanwhile, since the riveting block 3 abuts against the lower insulating member 8, when the mating portions of the boss 41 and the groove 21 are welded, the riveting rib 22 and the riveting block 3 provide force support, leading to great instantaneous impact on the lower insulating member 8, where the riveting block 3 increases contact force area with the lower insulating member 8, thereby reducing pressure on the lower insulating member 8 and reducing the cracking risk of the lower insulating member 8 under force.

A top surface of the positive electrode column 2 is provided with a welding slot 24, the welding slot 24 corresponds to the groove 21, and the welding slot 24 is suitable for welding the mating portions of the boss 41 and the groove 21. The welding slot 24 further decreases the welding thickness of the positive electrode column 2, and reduces the welding difficulty. Meanwhile, the welding slot 24 prevents welding marks from protruding from the surface of the positive electrode column 2 to affect connection with an external structure.

It should be noted that, because relevant structures of the cylindrical battery in this embodiment are elaborated in the previous assembly method, details will not be repeated here. For details, refer to the previous relevant descriptions of the shell 1, the electrode set 5, the positive electrode column 2, the riveting block 3, the positive electrode current collector plate 4, the negative electrode current collector plate 9, and the negative electrode cover plate 10.

In summary, the cylindrical battery assembly method and the cylindrical battery in this embodiment have the following advantages: the mating form of the positive electrode column 2 and the positive electrode current collector plate 4 improves assembly efficiency and performance, increases the current-carrying area of the battery, improves product yield, and lowers product costs.

Although the embodiments of the present application are described in conjunction with the drawings, a person skilled in the art may make various modifications and variations without departing from the spirit and scope of the present application, and such modifications and variations fall within the scope defined by the appended claims.

### Industrial Applicability

According to the cylindrical battery assembly method and the cylindrical battery provided in the present application, the positive electrode column is mounted into the mounting hole on the first end surface of the shell in the insulating and sealing manner, to achieve mutual insulating and sealing fixed connection between the positive electrode column and the shell; the boss of the positive electrode current collector plate is clamped into the groove of the positive electrode column, and the mating portions of the top surface of the boss and the bottom surface of the groove are welded, to achieve welding fixation between the boss and the groove; the mating between the top surface of the boss and the bottom surface of the groove increases welding area, and the groove decreases the welding thickness of the positive electrode column, thereby reducing welding difficulty, improving assembly efficiency, reducing contact internal resistance, increasing the current-carrying capacity of the battery, and improving product yield; and the riveting block is arranged on the outer circumference of the riveting rib to increase the structural strength of the positive electrode side of the battery cell.

## Claims

1. A cylindrical battery assembly method, wherein a cylindrical battery comprises a shell, a positive electrode column, a riveting block, a positive electrode current collector plate, an electrode set, a negative electrode current collector plate, and a negative electrode cover plate; a first end surface of the shell is provided with a mounting hole, a second end surface of the shell is formed with an opening, a side of the positive electrode column that faces an inside of the shell is provided with a groove, a riveting rib is formed on a circumference of the groove, and a side of the positive electrode current collector plate that faces the positive electrode column is provided with a boss; the assembly method comprises the following steps:
mounting the positive electrode column into the mounting hole in an insulating and sealing manner;
arranging the riveting block inside the shell and connecting the riveting block to an outer circumference of the riveting rib of the positive electrode column;
connecting the positive electrode current collector plate to a positive electrode tab of the electrode set;
placing the electrode set with the positive electrode current collector plate into the shell, and clamping the boss into the groove; and
welding mating portions of a bottom surface of the groove and a top surface of the boss from outside the shell.

2. The cylindrical battery assembly method as claimed in claim 1, wherein the arranging the riveting block inside the shell and connecting the riveting block to an outer circumference of the riveting rib of the positive electrode column specifically comprises:
fitting the riveting block to an outer circumference of the positive electrode column, allowing the riveting rib to pass through a through hole on the riveting block; and/or
bending the riveting rib outwards from the groove, to insert the riveting rib into a mounting groove of the riveting block.

3. The cylindrical battery assembly method as claimed in claim 2, wherein the positive electrode column comprises a limit protrusion located outside the shell and the riveting rib located inside the shell, the limit protrusion and the riveting rib limit two ends of the positive electrode column respectively, and the mounting the positive electrode column into the mounting hole in an insulating and sealing manner specifically comprises:
arranging a sealing member to abut against an outer wall of the positive electrode column and an inner wall of the mounting hole;
arranging an upper insulating member between the limit protrusion and an outer surface of the shell; and
arranging a lower insulating member on an inner surface of the shell, and allowing the riveting block to abut against the lower insulating member.

4. The cylindrical battery assembly method as claimed in claim 3, wherein the arranging an upper insulating member between the limit protrusion and an outer surface of the shell specifically comprises:
wrapping an outer circumference of the limit protrusion with a first insulating portion of the upper insulating member; and
arranging a second insulating portion of the upper insulating member between a bottom surface of the limit protrusion and the outer surface of the shell.

5. The cylindrical battery assembly method as claimed in claim 4, wherein the arranging a sealing member to abut against an outer wall of the positive electrode column and an inner wall of the mounting hole specifically comprises:
arranging a first sealing portion of the sealing member to abut against the outer surface of the shell and the bottom surface of the limit protrusion, and allowing an end of the first sealing portion to abut against the second insulating portion; and
arranging a second sealing portion of the sealing member to abut against the outer wall of the positive electrode column and the inner wall of the mounting hole, and allowing an end of the second sealing portion to abut against the lower insulating member.

6. The cylindrical battery assembly method as claimed in any one of claims 1 to 5, wherein the clamping the boss into the groove specifically comprises: rounding an opening of the groove to form a chamfer, and clamping the boss into the groove through the chamfer.

7. The cylindrical battery assembly method as claimed in any one of claims 1 to 5, wherein the welding mating portions of a bottom surface of the groove and a top surface of the boss from outside the shell specifically comprises:
forming a welding slot on a top surface of the positive electrode column, with the welding slot corresponding to the groove; and
welding the mating portions of the bottom surface of the groove and the top surface of the boss through the welding slot from outside the shell.

8. The cylindrical battery assembly method as claimed in any one of claims 1 to 5, further comprising:
connecting the negative electrode current collector plate to a negative electrode tab of the electrode set and the shell, to introduce negative electrode current of the electrode set into the shell.

9. The cylindrical battery assembly method as claimed in claim 8, further comprising:
sealing and connecting the negative electrode cover plate to the opening of the second end surface of the shell.

10. A cylindrical battery assembled using the cylindrical battery assembly method as claimed in any one of claims 1 to 9, comprising:
a shell, wherein a first end surface of the shell is provided with a mounting hole, and a second end surface of the shell is formed with an opening;
an electrode set arranged in the shell;
a positive electrode column mounted in the mounting hole in an insulating and sealing manner, wherein a side of the positive electrode column that faces an inside of the shell is provided with a groove, and a riveting rib is formed on a circumference of the groove;
a riveting block arranged in the shell and connected to an outer circumference of the riveting rib;
a positive electrode current collector plate connected to a positive electrode tab of the electrode set, wherein a side of the positive electrode current collector plate that faces the positive electrode column is provided with a boss, and the boss is clamped into the groove;
a negative electrode current collector plate connected to a negative electrode tab of the electrode set and the shell; and
a negative electrode cover plate sealed at the opening of the second end surface of the shell.
